(19) Europäisches Patentamt
European Patent Office
Office européen des brevets

(11) **EP 4 745 533 A1**

(12) **EUROPEAN PATENT APPLICATION**

(43) Date of publication:
**20.05.2026 Bulletin 2026/21**

(21) Application number: **25203520.9**

(22) Date of filing: **20.09.2025**

(51) International Patent Classification (IPC):
**G01F 1/66** *(2022.01)* **G01F 1/00** *(2022.01)*
**G01F 15/00** *(2006.01)* **G01F 15/06** *(2022.01)*
**G01F 25/10** *(2022.01)*

(52) Cooperative Patent Classification (CPC):
**G01F 1/666; G01F 1/00; G01F 15/005; G01F 15/06; G01F 25/13**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.10.2024 IN 202421083611**

(71) Applicant: **Tata Consultancy Services Limited Mumbai, Maharashtra 400 021 (IN)**

(72) Inventors:
• **SANTHANAM, Sivakumar Kuppusamy**
  **600086 Chennai, Tamil Nadu (IN)**
• **PADMANABHAN, Kausik**
  **600096 Chennai, Tamil Nadu (IN)**
• **KUMARA, Likhith Prasanna**
  **600113 Chennai, Tamil Nadu (IN)**
• **ANTONY, Grigary Cheeran**
  **695581 Trivandrum, Kerala (IN)**
• **AMEER, Abinshah**
  **695581 Trivandrum, Kerala (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **WATER FLOW RATE MEASUREMENT USING FUSION OF COMPUTER VISION AND AUDIO SIGNAL PROCESSING TECHNIQUES**

(57) Conventional checkerboard-based computer vision technique for water flow rate measurement faces challenges due to the reflection on water surface and turbulence of the waves. Embodiments herein provide a method and system for the water flow rate measurement using fusion of LOGKER-based computer vision and audio processing techniques. The method utilizes the LOGKER-based computer vision technique that accurately captures a water flow rate from a rotated faucet angle of a faucet handle and fuses the captured water flow rate with a microphone-based audio inputs, to obtain a final water flow rate. The method displays the final water flow rate contextually on a two-way mirror, using an Organic Light Emitting Diode (OLED) display, to a user. The method is less susceptible to external factors and computationally faster as it tracks black and white lines on the LOGKER instead of displacement of pixels.

**FIG. 2**

**Description**

CROSS-REFERENCE TO RELATED APPLICATIONS AND PRIORITY

The present application claims priority to Indian application no. 202421083611, filed on October 31, 2024.

TECHNICAL FIELD

The disclosure herein generally relates to computer vision and audio processing techniques, and, more particularly, to a method and system for water flow rate measurement using fusion of LOGKER-based computer vision and audio processing techniques.

BACKGROUND

Due to the availability of high computing Graphics Processing Unit (GPU) sets and superior algorithms, computer vision techniques are applied to measure water flow rates based on image recognition. Measurement of the water flow rates using computer vision algorithms are employed in multiple fields like infrastructure construction, traffic, civil engineering and other fields. Water flow meters are used to measure the amount of water flowing through a pipe. Current water flow meters use intrusive techniques by breaking water flow and adding flow sensors in between. Traditionally using physical water flow meters attached in the pipeline is a default approach of water flow velocity measurement. Measurement of water flow rates helps facility managers to plan water requirements correctly. However, using such a physical flow measurement has many challenges. Firstly, it is intrusive in nature and secondly pollutants present in the water may affect the flow measurement. Further conventional non-intrusive approaches are using computer vision techniques and audio signals for measuring the water flow rate. However, these approaches suffer with local influence such as brightness, background changes that affect image quality, background noise, and metal used in the pipe may affect sound quality.

Furthermore, checkerboard-based computer vision technique is used for measuring the water flow rate. A checkerboard pattern is applied on top of a faucet handle. However, this checkerboard pattern does not convey any meaningful information to a user and the facility managers. In addition, the checkerboard-based computer vision technique faces challenges due to the reflection on water surface and turbulence of the waves.

SUMMARY

Embodiments of the present disclosure present technological improvements as solutions to one or more of the above-mentioned technical problems recognized by the inventors in conventional systems. For example, in one embodiment, a method for water flow rate measurement using fusion of LOGKER-based computer vision and audio processing techniques is provided. The method includes receiving (i) a video feed pertaining to a rotated faucet angle of a faucet, and (ii) an audio feed pertaining to a water flow rate. Further the method includes identifying the water flow rate associated with the video feed during an open state of the faucet by: a) converting the video feed comprising a LOGKER into a grayscale image; b) preprocessing the grayscale image, using an Adaptive Histogram Equalization (AHE), to generate an equalized image; c) detecting the plurality of alternative black and white lines of the LOGKER in the equalized image, using a computer vision library technique; d) calculating a current faucet slope angle of a plurality of faucet slope angles, from the detected plurality of alternative black and white lines; e) calculating the rotated faucet angle using the current faucet slope angle and a baseline faucet slope angle; and f) identifying the water flow rate associated with the video feed by correlating the rotated faucet angle with a candidate water flow rate identified via a water flow meter. The method further includes identifying the water flow rate associated with the audio feed during the open state of the faucet. The method further includes fusing the water flow rate associated with the video feed and the water flow rate associated with the audio feed along with a camera feed metric and an audio feed metric, to generate a final water flow rate. The method further includes displaying a water flow volume of the final water flow rate along with an associated contextual display on a two-way display mirror, using an Organic Light Emitting Diode (OLED) display, to a user.

In another aspect, a system for water flow rate measurement using fusion of LOGKER-based computer vision and audio processing techniques is provided is provided. The system comprises a memory storing instructions; one or more communication interfaces; and one or more hardware processors coupled to the memory via the one or more communication interfaces (106), wherein the one or more hardware processors are configured by the instructions to: receive a video feed pertaining to a rotated faucet angle of a faucet, and (ii) an audio feed pertaining to a water flow rate; identify a water flow rate associated with the video feed an open state of the faucet by: a) converting the video feed comprising a LOGKER into a grayscale image; b) preprocessing the grayscale image, using an Adaptive Histogram Equalization (AHE), to generate an equalized image; c) the plurality of alternative black and white lines of the LOGKER in the equalized image, using a computer vision library technique; d) calculating a current faucet slope angle of a plurality of faucet slope angles, from the detected plurality of alternative black and white lines; e) calculating the rotated faucet angle using the current faucet slope angle and a baseline faucet slope angle; and f)identifying the water flow rate associated with the video feed by correlating the rotated faucet angle with a candidate water flow rate identified via a water flow meter; identify a water flow rate associated with the audio feed the open state of the faucet; fuse the water flow rate associated with the video feed and the water flow rate associated with the audio feed along with a camera feed metric and an audio feed metric, to generate a final water flow rate; and displaying a water flow volume of the final water flow rate along with an associated contextual display on a two-way display mirror, using an Organic Light Emitting Diode (OLED) display, to a user.

In yet another aspect, a non-transitory computer readable medium for water flow rate measurement using fusion of LOGKER-based computer vision and audio processing techniques is provided is provided. method includes receiving (i) a video feed pertaining to a rotated faucet angle of a faucet, and (ii) an audio feed pertaining to a water flow rate. Further the method includes identifying the water flow rate associated with the video feed during an open state of the faucet by: a) converting the video feed comprising a LOGKER into a grayscale image; b) preprocessing the grayscale image, using an Adaptive Histogram Equalization (AHE), to generate an equalized image; c) detecting the plurality of alternative black and white lines of the LOGKER in the equalized image, using a computer vision library technique; d) calculating a current faucet slope angle of a plurality of faucet slope angles, from the detected plurality of alternative black and white lines; e) calculating the rotated faucet angle using the current faucet slope angle and a baseline faucet slope angle; and f) identifying the water flow rate associated with the video feed by correlating the rotated faucet angle with a candidate water flow rate identified via a water flow meter. The method further includes identifying the water flow rate associated with the audio feed during the open state of the faucet. The method further includes fusing the water flow rate associated with the video feed and the water flow rate associated with the audio feed along with a camera feed metric and an audio feed metric, to generate a final water flow rate. The method further includes displaying a water flow volume of the final water flow rate along with an associated contextual display on a two-way display mirror, using an Organic Light Emitting Diode (OLED) display, to a user.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for water flow rate measurement using fusion of LOGKER-based computer vision and audio processing techniques, according to some embodiments of the present disclosure.

FIG. 2 depicts an architecture diagram for the water flow rate measurement using fusion of the LOGKER-based computer vision and the audio processing techniques, according to some embodiments of the present disclosure.

FIGS. 3A, and 3B depict a flow diagram for the water flow rate measurement using fusion of the LOGKER-based computer vision and the audio processing techniques, according to some embodiments of the present disclosure.

FIG. 4A depicts a setup comprising a camera, a microphone, and a two-way display mirror, for the water flow rate measurement using fusion of the LOGKER-based computer vision and the audio processing techniques, according to some embodiments of the present disclosure.

FIG. 5 depicts arrangement of a LOGKER attached to a faucet handle, according to some embodiments of the present disclosure.

FIG. 6 depicts a block diagram for identifying the water flow rate associated with a video feed, according to some embodiments of the present disclosure.

FIG. 7 depicts a block diagram illustrating identifying the water flow rate associated with an audio feed, according to some embodiments of the present disclosure.

FIG. 8A depicts capturing the plurality of pitch values of the frequency domain digital signal during an idle state of the faucet.

FIG 8B depicts capturing the plurality of pitch values of the frequency domain digital signal during an open state of the faucet, according to some embodiments of the present disclosure.

FIG. 9A depicts capturing of the plurality of Mel scale values of the frequency domain digital signal during the idle state of the faucet.

FIG. 9B depicts capturing of the plurality of Mel scale values of the frequency domain digital signal during the open state of the faucet, according to some embodiments of the present disclosure.

FIG. 10A depicts capturing the plurality of cepstrum coefficients of the frequency domain digital signal during the idle state of the faucet.

FIG. 10B depicts capturing of plurality of cepstrum coefficients of the frequency domain digital signal during the open state of the faucet, according to some embodiments of the present disclosure.

FIG. 11 depicts a block diagram illustrating fusing of the water flow rate associated with the video feed and the water flow rate associated with the audio feed along with a camera feed metric and an audio feed metric, to generate a final water flow rate, according to some embodiments of the present disclosure.

FIG. 12A depicts different LOGKERs with associated LOGKER line patterns, according to some embodiments of the present disclosure.

FIG. 12B depicts the different LOGKERs with the associated LOGKER line patterns captured by the camera for detecting a plurality of alternative black and white lines of the LOGKER, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for water flow rate measurement using fusion of LOGKER-based computer vision and audio processing techniques. The method utilizes the LOGKER-based computer vision technique that accurately captures a water flow rate from a rotated faucet angle of a faucet handle and fuses the captured water flow rate with a microphone-based audio inputs, to obtain a final water flow rate. The disclosed method displays a water flow volume of the final water flow rate along with an associated contextual display on a two-way display mirror, using an Organic Light Emitting Diode (OLED) display, to a user. A LOGKER serves as a branding tool for facility management. The existing checkerboard-based computer vision technique faces challenges due to reflection on the water surface and turbulence of the waves and does not convey any meaningful information to the user and the facility management. Whereas the disclosed method is less susceptible to external factors and computationally faster as it tracks black and white lines on the LOGKER instead of displacement of pixels.

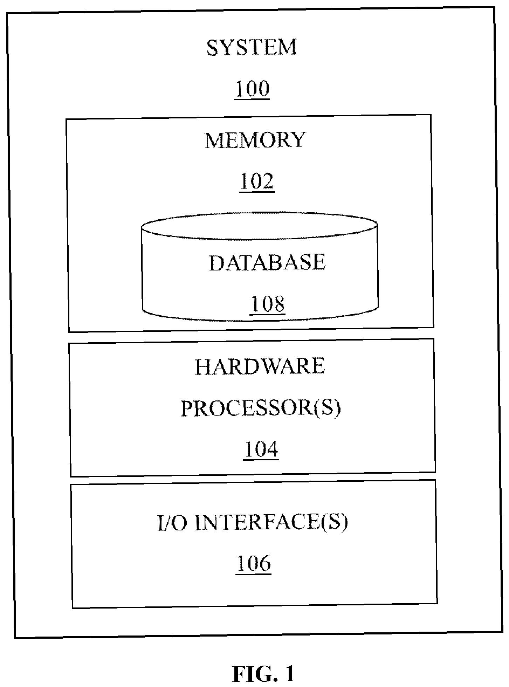

Referring now to the drawings, and more particularly to FIG. 1 through FIG. 12B, where similar reference characters denote corresponding features consistently throughout the figures, there are shown preferred embodiments, and these embodiments are described in the context of the following exemplary system and/or method.

FIG. 1 is a functional block diagram of a system 100 for the water flow rate measurement using fusion of the LOGKER-based computer vision and the audio processing techniques, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a video feed, the rotated faucet angle, an audio feed, the LOGKER, a plurality of alternative black and white lines, a plurality of faucet slope angles, a baseline faucet slope angle, and a candidate water flow rate, the water flow rate, the final water flow rate, a plurality of camera feed parameters, a plurality of audio feed parameters, the camera feed metric, and an audio feed metric. The memory 102 further comprises a plurality of modules (not shown for various technique(s) such as Adaptive Histogram Equalization (AHE), and a computer vision library technique. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

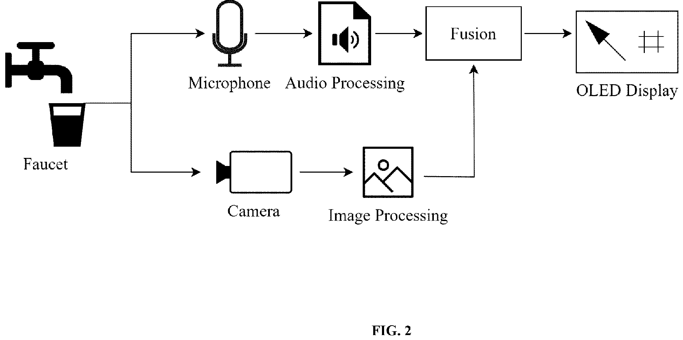

FIG. 2 depicts an architecture diagram for the water flow rate measurement using fusion of the LOGKER-based computer vision and the audio processing techniques, using the system 100 of FIG. 1, according to some embodiments of the present disclosure. A microphone component captures the audio feed to identify the water flow rate associated with the audio feed during an open state of the faucet. A camera component captures the video feed to identify the water flow rate associated with the video feed during the open state of the faucet. A fusion component fuses the water flow rate associated with the video feed and the water flow rate associated with audio feed along with the camera feed metric and the audio feed metric, to generate the final water flow rate. An OLED display component displays the water flow volume of the final water flow rate along with the associated contextual display on the two-way display mirror, using the OLED display, to the user.

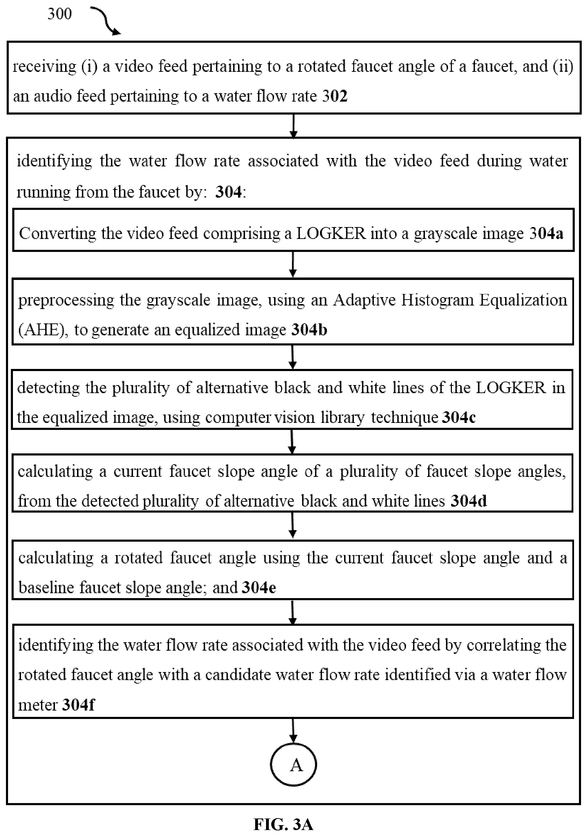

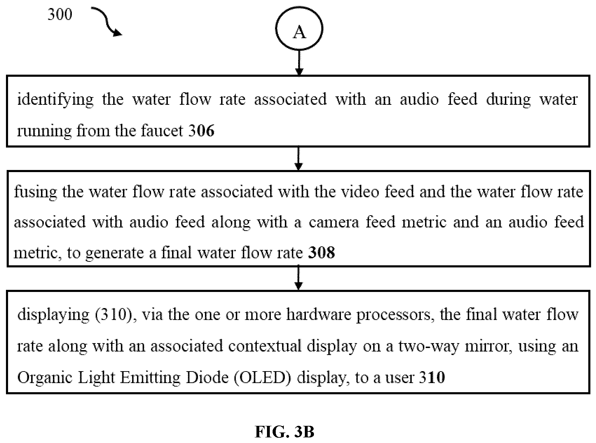

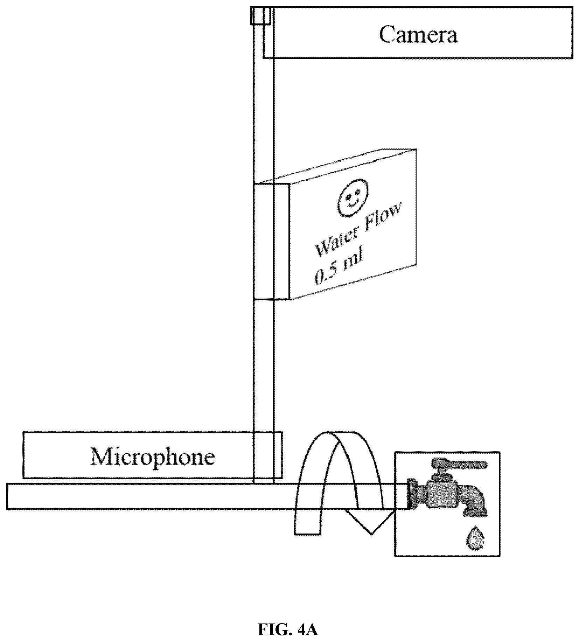

FIGS. 3A and 3B is a flow diagram for the water flow rate measurement using fusion of the LOGKER-based computer vision and the audio processing techniques, in accordance with some embodiments of the present disclosure. A setup comprises the camera, a microphone, and the two-way display mirror is depicted in FIG. 4, for the water flow rate measurement using fusion of the LOGKER-based computer vision and the audio processing techniques, according to some embodiments of the present disclosure. The video feed comprising the LOGKER pertaining to the rotated faucet angle of the faucet is captured by the camera to identify the water flow rate associated with the video feed. The arrangement of the LOGKER attached on the faucet is depicted in 5, according to some embodiments of the present disclosure. The faucet comprises the open state and an idle state. During the open state of the faucet a stream of water exits from the faucet, and the idle state is a closed state of the faucet, such that no water exits from the faucet. The water flow rate associated with the audio feed during the open state of the faucet is captured by the microphone. Further the water flow rate associated with the video feed and the water flow rate associated with audio feed along with the camera feed metric and the audio feed metric are fused, to generate the final water flow rate. The water flow volume of the final water flow rate along with an associated contextual display is presented on the two-way display mirror, using the OLED display, to the user.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIGS. 3A and 3B. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

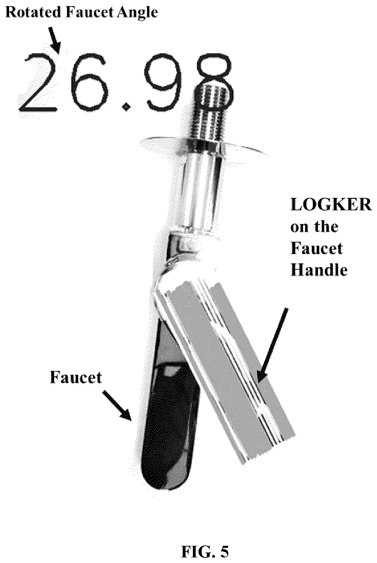

Referring to steps of FIG. 3A, at step 302 of the method 300, via one or more hardware processors 104 receives the video feed pertaining to the rotated faucet angle of a faucet, and (ii) the audio feed pertaining to the water flow rate. The video feed comprises a plurality of images of the LOGKER on the faucet handle. The audio feed comprises a plurality of signals at different time series of the stream of water exiting from the faucet. The audio feed is captured as a continuous signal input via the microphone attached to the faucet. The video feed comprising an optimal size composed of the plurality of alternative black and white lines is obtained by capturing the LOGKER attached on the faucet handle of the faucet via the camera mounted in a view of the faucet handle of the faucet. The LOGKER is a combination of a logo and a marker. The marker is an image pattern that can be detected by the camera using the image processing technique. FIG. 5 depicts arrangement of the LOGKER attached to the faucet handle, according to some embodiments of the present disclosure.

The camera captures the rotated faucet angle of the faucet handle of the faucet. A plurality of rotated faucet angles of the faucet handle comprises 0° through 180°. The size of the plurality of alternative black and white lines in the LOGKER should not be too large so that it cannot be pasted onto the faucet handle and not too small so that the LOGKER is not at all detected by the camera. The optimal size of the LOGKER is calculated based on the size, a camera distance to the LOGKER, a camera resolution, and a focal length of the camera. The plurality of alternative black and white lines on the LOGKER give a current slope angle based on the orientation of the tap handle. The plurality of alternative black and white lines is created on the LOGKER based on a minimum width of the faucet handle given by:

$$Width_{MIN} = 2\frac{L_{sensor}}{L_{focal}}\frac{\text{Distance}}{\text{Resolution}}$$

where

L_sensor is a minimum size supported by the camera;
L_focal is the focal length of the camera;
Distance is the length between lens of the camera distance and the LOGKER;
and
Resolution is a plurality of pixels which are displayed per inch of an image.

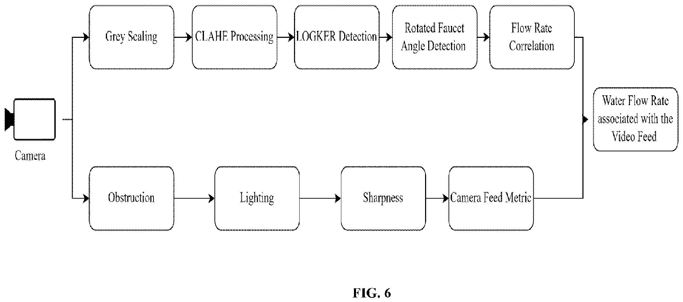

At step 304 of the method 300, via the one or more hardware processors identifies the water flow rate associated with the video feed during the open state of the faucet. FIG. 6 depicts a block diagram for identifying the water flow rate associated with the video feed, according to some embodiments of the present disclosure. In an embodiment, identifying the water flow rate associated with the video feed during the open state of the faucet is explained through steps 304a to 304f. At step 304a, the system 100 converts the video feed comprising the LOGKER into a grayscale image. The camera feed is taken as input in the form of red, green and blue (RGB) - channel 3 and is converted to the grayscale image which produces the output as pixels of single channel with white to black intensity.

At step 304b of the method 300, the system preprocesses the grayscale image to clearly distinguish between the black and white lines, using the advanced AHE, to generate an equalized image. Prepossessing is performed on the grayscale image to have differentiate pixels by using the advanced AHE. The disclosed method 300 uses advanced AHE called Contrast-Limited Adaptive Histogram Equalization (CLAHE), that localizes equalization to avoid too many dark patches using a contrast limit, according to some embodiments of the present disclosure. The output of the CLAHE is the equalized image that represents the LOGKER clearly for detection.

At step 304c of the method 300, the system 100 detects the plurality of alternative black and white lines of the LOGKER in the equalized image, using a computer vision library technique (Hough Line Transform). At step 304d of the method 300, the system 100 calculates a current faucet slope angle of a plurality of faucet slope angles, from the detected plurality of alternative black and white lines.

At step 304e of the method 300, the system 100 calculates the rotated faucet angle using the current faucet slope angle and the baseline faucet slope angle. The baseline faucet slope angle is detected at the start of water stream from the faucet as the baseline which is considered as 0°.

At step 304f of the method 300, the system 100 identifies the water flow rate associated with the video feed by correlating the rotated faucet angle with the candidate water flow rate identified via a water flow meter. The rotated faucet angle of the LOGKER between the current faucet slope angle and the baseline faucet slope angle is correlated with a max flow possible by a pipe. This rotated faucet angle is correlated with the candidate water flow rate identified via the water flow meter.

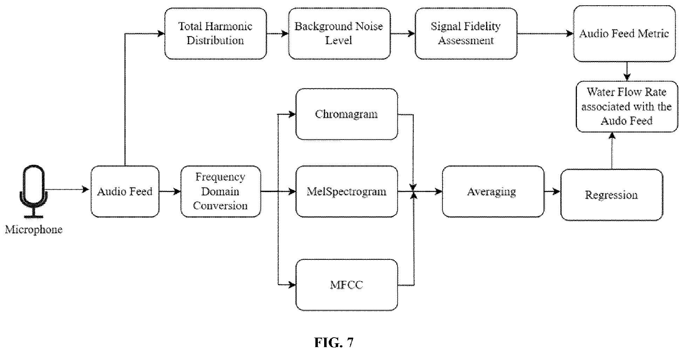

Upon identifying the water flow rate associated with the video feed, at the step 308 of the method 300, the system 100 identifies, via the one or more hardware processors 104, the water flow rate associated with the audio feed during the open state of the faucet. FIG. 7 depicts a block diagram for identifying the water flow rate associated with the audio feed, according to some embodiments of the present disclosure. The sound produced by the water stream is captured by a sensor in the form of the continuous signal input using the microphone. The steps for identifying the water flow rate associated with the audio feed during the open state of the faucet comprises:

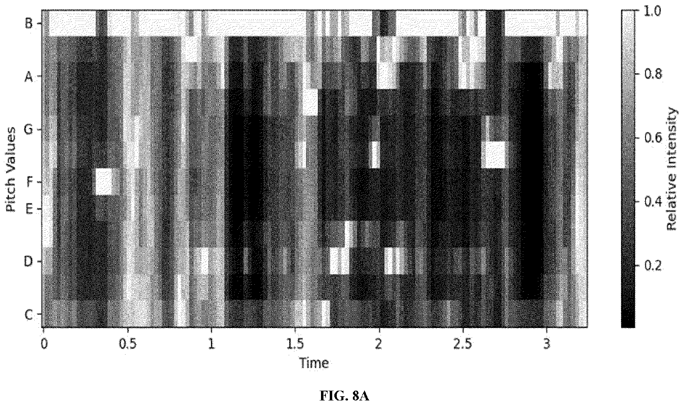

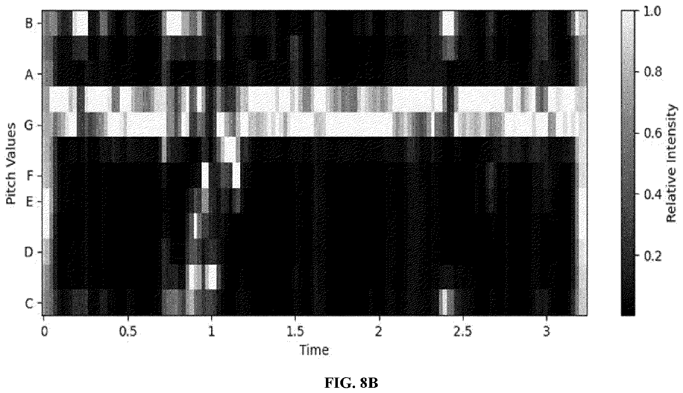

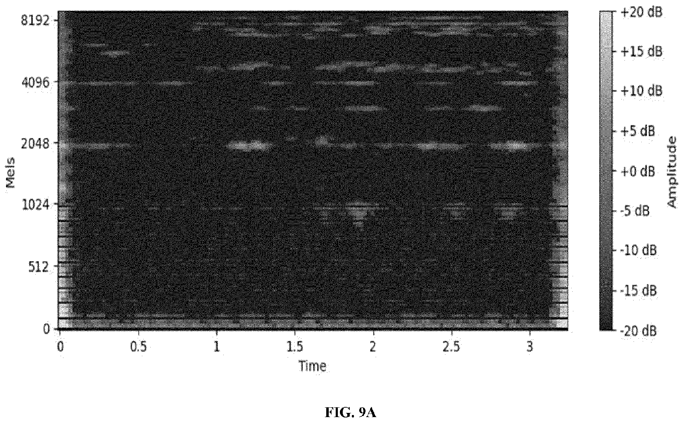

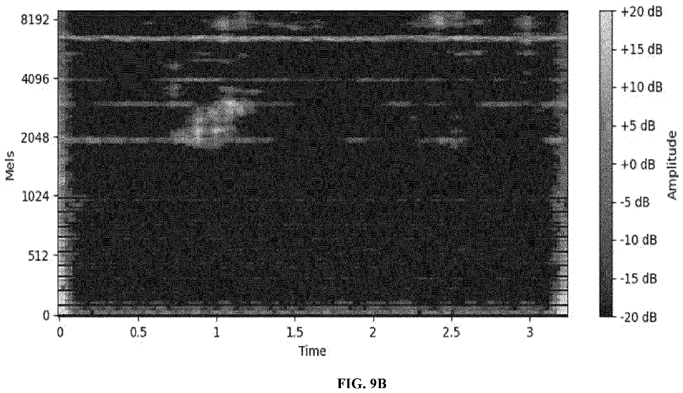

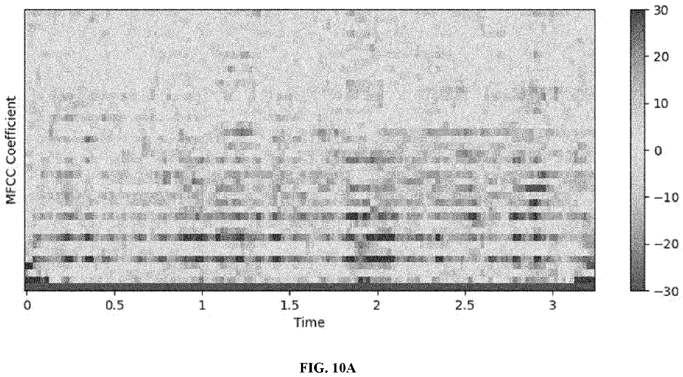

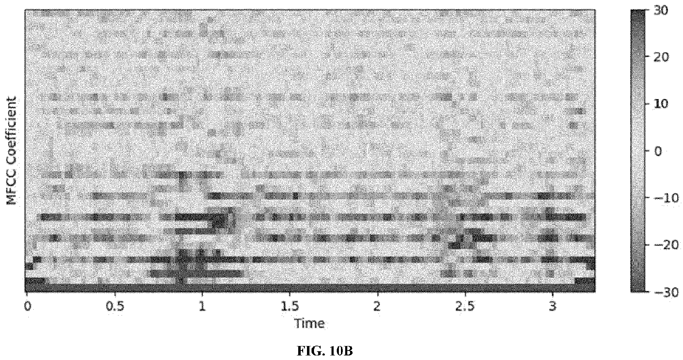

(a) Converting the continuous signal input of the audio feed captured via the microphone to a time domain digital signal, by taking samples at a specific rate, using a digital signal processing technique.
(b) Converting the time domain digital signal to a frequency domain digital signal. The time domain digital signal is taken at short period from the whole series of the audio feed where it would be processed to obtain the frequency domain digital signal from it. In a specific period, a Short Time Fourier Transform (STFT) is utilized to get the magnitude and phase of the frequency. This is done for the entire time series of the audio feed to convert it into the frequency domain digital signal.
(c) Extracting (i) a plurality of pitch values of the frequency domain digital signal using an audio chromogram, (ii) a plurality of Mel scale values of the frequency domain digital signal using Mel frequency technique, and (iii) a plurality of cepstrum coefficients of the frequency domain digital signal using Mel Frequency Cepstrum Coefficient (MFCC). The frequency domain digital signal is processed in short bins where the power of the sound and the frequency of the sound are mapped to the 7 pitch classes (A, B, C, D, E, F, G) to extract the plurality of pitch values of the frequency domain digital signal using the audio chromogram. FIG. 8A depicts capturing of the plurality of pitch values of the frequency domain digital signal during the idle state of the faucet. FIG 8B depicts capturing the plurality of pitch values of the frequency domain digital signal during the open state of the faucet. The plurality of Mel scale values of the frequency domain digital signal is obtained using Mel frequency technique by extracting maximum frequency and minimum frequency from the frequency domain digital signal. FIG. 9A depicts capturing of the plurality of Mel scale values of the frequency domain digital signal during the idle state of the faucet. FIG. 9B depicts capturing of the plurality of Mel scale values of the frequency domain digital signal during the open state of the faucet. The plurality of Mel scale values also referred to as Mels as depicted in FIGS. 9A, and 9B. The plurality of cepstrum coefficients of the frequency domain digital signal using MFCC of the frequency domain digital signal is obtained by extracting the maximum frequency and the minimum frequency from the frequency domain digital signal. FIG. 10A depicts capturing the plurality of cepstrum coefficients of the frequency domain digital signal during the idle state of the faucet. FIG. 10B depicts capturing of the plurality of cepstrum coefficients of the frequency domain digital signal during the open state of the faucet. The plurality of cepstrum coefficients also referred to as MFCC coefficients as depicted in FIGS. 10A, and 10B.

(d) Generating a feature vector based on the plurality of Mel scale values, the plurality of Mel scale values, and the plurality of cepstrum coefficients. The extracted plurality of Mel scale values, the plurality of Mel scale values, and the plurality of cepstrum coefficients are of a 2-dimensional array. This 2-dimensional array is reduced to 1-dimensional array to make a faster and simpler processing. The values of the 1-dimensional array corresponding to the plurality of Mel scale values, the plurality of Mel scale values, and the plurality of cepstrum coefficients are combined to generate the feature vector.

(e) feeding the generated feature vector to a trained regression model. The regression model is trained with the waterflow rate and the associated audio feed by applying a transform to extract i) the plurality of pitch values of the frequency domain digital signal using the audio chromogram, (ii) the plurality of Mel scale values of the frequency domain digital signal using Mel frequency technique, and (iii) the plurality of cepstrum coefficients of the frequency domain digital signal using the Mel Frequency Cepstrum Coefficient (MFCC), to predict the water flow rate associated with the audio feed.

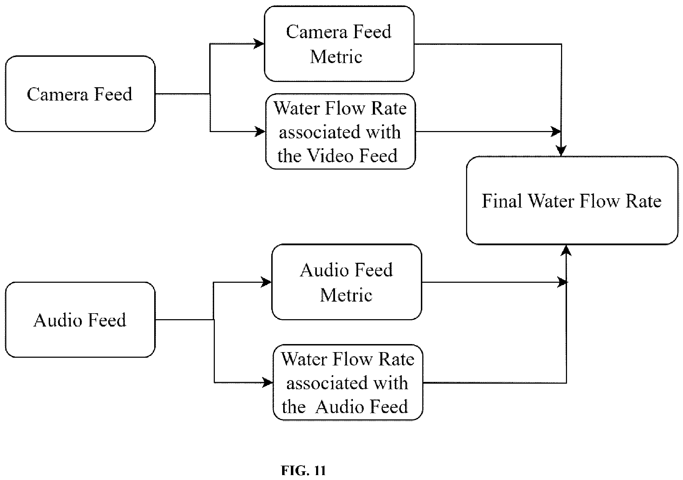

At step 308 of the method 300, the system 100, via the one or more hardware processors identify fuses the water flow rate associated with the video feed and the water flow rate associated with audio feed along with the camera feed metric and the audio feed metric, to generate the final water flow rate. FIG. 11 depicts a block diagram illustrating fusing the water flow rate associated with the video feed and the water flow rate associated with audio feed along with the camera feed metric and the audio feed metric, to generate the final water flow rate, according to some embodiments of the present disclosure.

The camera feed metric that analyses quality of the camera feed affected by a plurality of video external environment factors is generated using a plurality of camera feed parameters comprising at least one of (i) an obstruction, (ii) a lighting, and (iii) a sharpness. In other words, any one of the above or a combination of (i) the obstruction, (ii) the lighting, and (iii) the sharpness may be used for analyzing the quality of the camera feed. The obstruction is used to understand how much of an object of interest is obstructed by other objects. For example, Obstructing of the marker with hand or other objects.

$$Obstuction = \frac{N_{\text{detected}}}{N_{actual}}$$

$N_{detected}$ - The plurality of alternative black and white lines of the LOGKER detected, and
$N_{actual}$ - The plurality of alternative black and white lines of the LOGKER actual.

The camera feed metric depends on condition of the lighting in an area in which the faucet is located like brightness or darkness. The plurality of alternative black and white lines of the LOGKER are cropped, and uniformity of contrast and intensity is checked. By checking the deviation of the intensity of the plurality of alternative black and white lines of the LOGKER with respect to mean, the uniformity of the lighting is defined as:

$$\text{Uniformity}\left(S_{i,j}\right) = \sqrt{\frac{1}{n \times m} \sum_{x=1}^{n} \sum_{y=1}^{m} \left(I(x,y) - AvgIntensity\left(S_{i,j}\right)\right)^2}$$

Where

n - Height of the LOGKER;
m - Width of the LOGKER,
$I(x,y)$ - Intensity at $(x, y)$ Pixel,
$S_{i,j}$ - Image (LOGKER)

The camera feed metric depends on sharpness (Laplacian) if the faucet handle is moved very quickly the LOGKER is blurred given by:

$$L(x, y) = \frac{\partial^2 I(x, y)}{\partial x^2} + \frac{\partial^2 I(x, y)}{\partial y^2}$$

$L$ $(x, y)$ - Sharpness (Laplacian) matrix;
$I(x,y)$ - Image pixel at $(x, y)$;

$\frac{\partial^2 I(x,y)}{\partial x^2}$ - Partial differentiation with respect to x; and

$\frac{\partial^2 I(x,y)}{\partial y^2}$ - Partial differentiation with respect to y.

The camera feed metric is a fusion of the plurality of camera feed parameters comprising the obstruction, the lighting, and the sharpness. The camera feed metric according to some embodiments of the present disclosure is given by:

$$I_{quality} = w_1 \, Obstruction + w_2 \, \text{Uniformity} + w_3 \, L$$

where $w1$, $w2$, $w3$ are experimentally derived arbitrary values.

The audio feed metric that analyses the quality of the audio feed affected by a plurality of audio external environment factors is generated using a plurality of audio feed parameters comprising at least one of (i) a Total Harmonic Distortion (THD), (ii) a Background Noise Level (BNL), and (iii) a Signal Fidelity Assessment (SFA). In other words, any one of the above or a combination of (i) the THD, (ii) the BNL, and (iii) the SFA may be used for analyzing the quality of the audio feed. The THD is an audio feed parameter that shows how much noise is introduced by the microphone.

At the BNL the audio feed is captured in a base line and during non-operation (idle state) of the faucet. The amplitude data of the audio feed at each timeframe is taken and averaged out for the entire duration. The average data is taken and compared over the duration of operation to understand if there is a change in value (increase or decrease) is observed.

In the SFA an actual signal is generated and played by the microphone. This actual signal is received by the microphone. The audio feed received is checked for deviation in frequency, amplitude, and pitch with the actual signal.

$$FA = (\Delta Frequency)\% \cdot (\Delta Amplitude)\% \cdot (\Delta Pitch)\%$$

where, $\Delta Frequency = F_R - F_A$, $\Delta Amplitude = A_R - A_A$, $\Delta Pitch = P_R - P_A$
$F_R$ : received frequency; $F_A$: actual frequency; $A_R$ : received amplitude, $A_A$ : actual amplitude; $P_R$ : received pitch; $P_A$: actual pitch

The audio feed metric is the fusion of the plurality of audio feed parameters comprising the THD, the BNL, and the SFA. The audio feed metric according to some embodiments of the present disclosure is given by: *THD + BNL + SFA.*

The waterflow volume associated with the final water flow rate is obtained by multiplying the final water flow rate with time taken *Volume$_{flow}$ = Flow · time taken.*

At step 310 of the method 300, the system 100, via the one or more hardware processors displays the waterflow volume of the final water flow rate along with the associated contextual display on the two-way display mirror, using the OLED display, to the user. If the waterflow volume is less than a predefined threshold value, the contextual display comprising a smile emotional expression is displayed on the two-way display mirror, using the OLED display. If the waterflow volume is greater than the predefined threshold value, the contextual display comprising a sad emotional expression is displayed on the two-way display mirror, using the OLED display.

**Experimental Results**

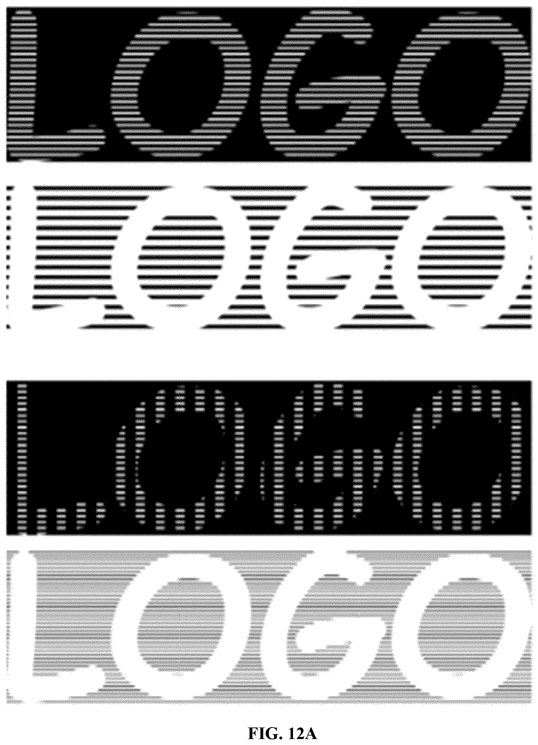

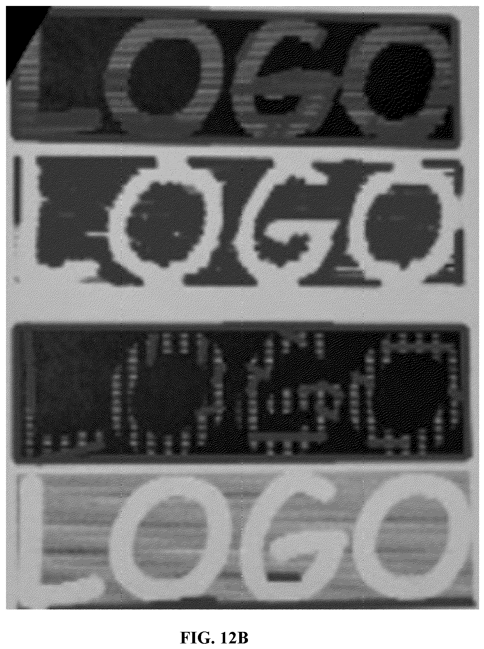

Experiments related to the disclosed method were tested with different LOGKERs for detecting the plurality of black and white lines. FIG. 12A depicts different LOGKERs with associated LOGKER line patterns, according to some embodiments of the present disclosure. The different LOGKERs with associated LOGKER line patterns comprises (i) a LOGKER with horizontal and vertical black lines, (ii) a LOGKER with vertical white lines of a minimal width, (iii) a LOGKER with vertical white lines of an higher width, and (iv) a LOGKER horizontal black lines of higher width. The camera is fixed at a standard length from the LOGKER. FIG. 12B depicts different LOGKERs with associated LOGKER line patterns captured by the camera for detecting the plurality of alternative black and white lines of the LOGKER, according to some embodiments of the present disclosure. The present disclosure requires images/text that may be distorted or generates intermediate/final outputs that are distorted or may appear to be unclear. The length was made similar of a real time situation. The video feed of the different LOGKERs were processed by the system 100 to identify the LOGKER from different LOGKERS that which LOGKER was detected best to identify the water flow rate associated with the video feed during the open state of the faucet. While conducting the experiment hands were used to create obstruction between the camera and the LOGKER to observe whether the system 100 could detect the LOGKER. Based on experimental results it was observed the LOGKER with vertical white lines of a higher width were detected efficiently. The optimum width of the LOGKER is determined empirically to get an accurate detection.

Table. 1

| LOGKER Line Pattern | LOGKER Line Color | Detection rate | Selected? |
|---|---|---|---|
| **LOGKER with horizontal and vertical black lines** | Black | Only Edges detected | Rejected |
| **LOGKER with vertical white lines of a minimal width** | White | Only Edges detected | Rejected |
| **LOGKER with vertical white lines of higher width** | White | Lines Detected | Selected |
| **LOGKER horizontal black lines of higher width** | Black | Only Edges detected | Rejected |

The water flow rate associated with the audio feed was identified during the open state of the faucet, via the audio processing techniques. The water flow rate associated with the video feed and the water flow rate associated with audio feed along with the camera feed metric and the audio feed metric are fused to generate the final water flow rate. The Experiment was conducted with the water flow rate identified via the water flow meter as ground truth and the video feed comprising the LOGKER and the audio feed to test the values. The water flow rate from the water flow meter is compared with the final water flow rate. The reading of the water flow meter, the final water flow rate obtained in the experiment along with error is illustrated in Table. 2 Out of 142 seconds/samples of the continuous data, the system 100 had achieved an accuracy of 89% and a Root mean square error (RMSE) value of 0.005, which had given a tolerance of +/- 0.005 L.

Table. 2

| Flow meter reading (L) | Experiment detail (L) | Error (L) |
|---|---|---|
| 0.016 | 0.015 | -0.001 |
| 0.002 | 0.007 | 0.005 |
| 0.02 | 0.02 | 0 |
| 0.011 | 0.016 | 0.005 |
| 0.029 | 0.038 | 0.009 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address an unresolved problem of accurately measuring the water flow rate which is less susceptible to external factors and computationally faster as it tracks black and white lines on the LOGKER instead of displacement of pixels. Embodiments herein provide a method and system for the water flow rate measurement using fusion of the LOGKER-based computer vision and the audio processing techniques. The method utilizes the LOGKER-based computer vision technique that accurately captures the water flow rate from the faucet angle of the faucet handle and fuses the captured water flow rate with a microphone-based audio inputs, to obtain the final water flow rate. The method displays the water flow volume of the final water flow rate contextually on the two-way mirror, using the OLED display, to the user. The method is less susceptible to external factors and computationally faster as it tracks black and white lines on the LOGKER instead of displacement of pixels.

The conventional techniques are intrusive, which requires more modification to measure the water flow rate. The disclosed method is non-intrusive as the microphone and the cameras are attached in a given location, and the disclosed method is marketing friendly as it would also help in promoting the brand. Using less computational power, the image processing techniques instead of the machine learning, and using audio feed as a fusion combination provides as upper hand which can be deployed on suitable edge devices also. Using the OLED display and showing an emoticon based on usage of water by the user gives awareness on the usage of resource used and also alerts him to be careful in future scenarios.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (300), the method comprising:

receiving (302), via one or more hardware processors, (i) a video feed pertaining to a rotated faucet angle of a faucet, and (ii) an audio feed pertaining to a water flow rate;
identifying (304), via the one or more hardware processors, the water flow rate associated with the video feed during an open state of the faucet by:

a) converting (304a) the video feed comprising a LOGKER into a grayscale image;
b) preprocessing (304b) the grayscale image, using an Adaptive Histogram Equalization (AHE), to generate an equalized image;

c) detecting (304c) the plurality of alternative black and white lines of the LOGKER in the equalized image, using a computer vision library technique;

d) calculating (304d) a current faucet slope angle of a plurality of faucet slope angles, from the detected plurality of alternative black and white lines;

e) calculating (304e) the rotated faucet angle using the current faucet slope angle and a baseline faucet slope angle; and

f) identifying (304f) the water flow rate associated with the video feed by correlating the rotated faucet angle with a candidate water flow rate identified via a water flow meter;

identifying (306), via the one or more hardware processors, the water flow rate associated with the audio feed during the open state the faucet;

fusing (308), via the one or more hardware processors, the water flow rate associated with the video feed and the water flow rate associated with the audio feed along with a camera feed metric and an audio feed metric, to generate a final water flow rate; and

displaying (310), via the one or more hardware processors, a water flow volume of the final water flow rate along with an associated contextual display on a two-way display mirror, using an Organic Light Emitting Diode (OLED) display, to a user.

2. The processor implemented method as claimed in claim 1, wherein the video feed comprising the LOGKER of an optimal size composed of the plurality of alternative black and white lines is obtained by capturing the LOGKER attached on a faucet handle of the faucet via a camera mounted in a view of the faucet handle of the faucet, and wherein the optimal size of the LOGKER is calculated based on a size, a camera distance to the LOGKER, a resolution, and a focal length of the camera.

3. The processor implemented method as claimed in claim 1, wherein the step of identifying the water flow rate associated with the audio feed during the water running from the faucet comprises:

(a) converting a continuous signal input of the audio feed captured via a micro microphone to a time domain digital signal, using a digital signal processing technique;

(b) converting the time domain digital signal to a frequency domain digital signal;

(c) extracting (i) a plurality of pitch values of the frequency domain digital signal using an audio chromogram, (ii) a plurality of Mel scale values of the frequency domain digital signal using Mel frequency technique, and (iii) a plurality of Cepstrum coefficients of the frequency domain digital signal using Mel Frequency Cepstrum Coefficient (MFCC);

(d) generating a feature vector based on the plurality of Mel scale values, the plurality of Mel scale values, and the plurality of Cepstrum coefficients; and

(e) feeding the generated feature vector to a trained regression model, to predict the water flow rate associated with the audio feed.

4. The processor implemented method as claimed in claim 1, wherein the camera feed metric that analyses quality of the camera feed affected by a plurality of video external environment factors is generated using a plurality of camera feed parameters comprising at least one of (i) an obstruction, (ii) a lighting, and (iii) a sharpness.

5. The processor implemented method as claimed in claim 1, wherein the audio feed metric that analyses the quality of the audio feed affected by a plurality of audio external environment factors is generated using a plurality of audio feed parameters comprising at least one of (i) a Total Harmonic Distortion (THD), (ii) a Background Noise Level (BNL), and (iii) a Signal Fidelity Assessment (SFA).

6. A system (100) comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive a video feed pertaining to a rotated faucet angle of a faucet, and (ii) an audio feed pertaining to a water flow rate;

identify a water flow rate associated with the video feed during an open state of the faucet by:

a) converting the video feed comprising a LOGKER into a grayscale image;

b) preprocessing the grayscale image, using an Adaptive Histogram Equalization (AHE), to generate an equalized image;

c) detecting the plurality of alternative black and white lines of the LOGKER in the equalized image, using a computer vision library technique;

d) calculating a current faucet slope angle of a plurality of faucet slope angles, from the detected plurality of alternative black and white lines;

e) calculating the rotated faucet angle using the current faucet slope angle and a baseline faucet slope angle; and

f) identifying the water flow rate associated with the video feed by correlating the rotated faucet angle with a candidate water flow rate identified via a water flow meter;

identify a water flow rate associated with the audio feed during the open state of the faucet;

fuse the water flow rate associated with the video feed and the water flow rate associated with the audio feed along with a camera feed metric and an audio feed metric, to generate a final water flow rate; and

displaying a water flow volume of the final water flow rate along with an associated contextual display on a two-way display mirror, using an Organic Light Emitting Diode (OLED) display, to a user.

7. The system as claimed in claim 6, wherein the video feed comprising the LOGKER of an optimal size composed of the plurality of alternative black and white lines is obtained by capturing the LOGKER attached on a faucet handle of the faucet via a camera mounted in a view of the faucet handle of the faucet, and wherein the optimal size of the LOGKER is calculated based on a size, a camera distance to the LOGKER, a resolution, and a focal length of the camera.

8. The system as claimed in claim 6, wherein the step of identifying the water flow rate associated with the audio feed during the water running from the faucet comprises:

(a) converting the continuous signal of the audio feed captured via a micro microphone to a time domain digital signal, using a digital signal processing technique;

(b) converting the time domain digital signal to a frequency domain digital signal;

(c) extracting (i) a plurality of pitch values of the frequency domain digital signal using an audio chromogram, (ii) a plurality of Mel scale values of the frequency domain digital signal using Mel frequency technique, and (iii) a plurality of Cepstrum coefficients of the frequency domain digital signal using Mel Frequency Cepstrum Coefficient (MFCC);

(d) generating a feature vector based on the plurality of Mel scale values, the plurality of Mel scale values, and the plurality of Cepstrum coefficients; and

(e) feeding the generated feature vector to a trained regression model, to predict the water flow rate associated with the audio feed.

9. The system as claimed in claim 6, wherein the camera feed metric that analyses quality of the camera feed affected by a plurality of video external environment factors is generated using a plurality of camera feed parameters comprising at least one of (i) an obstruction, (ii) a lighting, and (iii) a sharpness.

10. The system as claimed in claim 6, wherein the audio feed metric that analyses the quality of the audio feed affected by a plurality of audio external environment factors is generated using a plurality of audio feed parameters comprising at least one of (i) a Total Harmonic Distortion (THD), (ii) a Background Noise Level (BNL), and (iii) a Signal Fidelity Assessment (SFA).

11. One or more non-transitory machine-readable information storage mediums comprising one or more instructions which when executed by one or more hardware processors cause:

receiving (i) a video feed pertaining to a rotated faucet angle of a faucet, and (ii) an audio feed pertaining to a water flow rate;

identifying the water flow rate associated with the video feed during an open state of the faucet by:

(a) converting the video feed further comprising a LOGKER into a grayscale image;

(b) preprocessing the grayscale image, using an Adaptive Histogram Equalization (AHE), to generate an equalized image;

(c) detecting the plurality of alternative black and white lines of the LOGKER in the equalized image, using a computer vision library technique;

(d) calculating a current faucet slope angle of a plurality of faucet slope angles, from the detected plurality of alternative black and white lines;

(e) calculating the rotated faucet angle using the current faucet slope angle and a baseline faucet slope angle; and

(f) identifying the water flow rate associated with the video feed by correlating the rotated faucet angle with a candidate water flow rate identified via a water flow meter;

identifying the water flow rate associated with the audio feed during the open state the faucet;

fusing the water flow rate associated with the video feed and the water flow rate associated with the audio feed along with a camera feed metric and an audio feed metric, to generate a final water flow rate; and

displaying a water flow volume of the final water flow rate along with an associated contextual display on a two-way display mirror, using an Organic Light Emitting Diode (OLED) display, to a user.

12. The one or more non-transitory machine-readable information storage mediums as claimed in claim 11, wherein the video feed comprising the LOGKER of an optimal size composed of the plurality of alternative black and white lines is obtained by capturing the LOGKER attached on a faucet handle of the faucet via a camera mounted in a view of the faucet handle of the faucet, and wherein the optimal size of the LOGKER is calculated based on a size, a camera distance to the LOGKER, a resolution, and a focal length of the camera.

13. The one or more non-transitory machine-readable information storage mediums as claimed in claim 11, wherein the step of identifying the water flow rate associated with the audio feed during the water running from the faucet comprises:

(a) converting a continuous signal input of the audio feed captured via a micro microphone to a time domain digital signal, using a digital signal processing technique;

(b) converting the time domain digital signal to a frequency domain digital signal;

(c) extracting (i) a plurality of pitch values of the frequency domain digital signal using an audio chromogram, (ii) a plurality of Mel scale values of the frequency domain digital signal using Mel frequency technique, and (iii) a plurality of Cepstrum coefficients of the frequency domain digital signal using Mel Frequency Cepstrum Coefficient (MFCC);

(d) generating a feature vector based on the plurality of Mel scale values, the plurality of Mel scale values, and the plurality of Cepstrum coefficients; and

(e) feeding the generated feature vector to a trained regression model, to predict the water flow rate associated with the audio feed.

14. The one or more non-transitory machine-readable information storage mediums as claimed in claim 11, wherein the camera feed metric that analyses quality of the camera feed affected by a plurality of video external environment factors is generated using a plurality of camera feed parameters comprising at least one of (i) an obstruction, (ii) a lighting, and (iii) a sharpness.

15. The one or more non-transitory machine-readable information storage mediums as claimed in claim 11, wherein the audio feed metric that analyses the quality of the audio feed affected by a plurality of audio external environment factors is generated using a plurality of audio feed parameters comprising at least one of (i) a Total Harmonic Distortion (THD), (ii) a Background Noise Level (BNL), and (iii) a Signal Fidelity Assessment (SFA).

SYSTEM

<u>100</u>

MEMORY

<u>102</u>

DATABASE

<u>108</u>

HARDWARE

PROCESSOR(S)

<u>104</u>

I/O INTERFACE(S)

<u>106</u>

**FIG. 1**

**FIG. 2**

300

receiving (i) a video feed pertaining to a rotated faucet angle of a faucet, and (ii) an audio feed pertaining to a water flow rate **302**

identifying the water flow rate associated with the video feed during water running from the faucet by: **304**:

Converting the video feed comprising a LOGKER into a grayscale image **304a**

preprocessing the grayscale image, using an Adaptive Histogram Equalization (AHE), to generate an equalized image **304b**

detecting the plurality of alternative black and white lines of the LOGKER in the equalized image, using computer vision library technique **304c**

calculating a current faucet slope angle of a plurality of faucet slope angles, from the detected plurality of alternative black and white lines **304d**

calculating a rotated faucet angle using the current faucet slope angle and a baseline faucet slope angle; and **304e**

identifying the water flow rate associated with the video feed by correlating the rotated faucet angle with a candidate water flow rate identified via a water flow meter **304f**

( A )

**FIG. 3A**

300

(A)

identifying the water flow rate associated with an audio feed during water running from the faucet **306**

fusing the water flow rate associated with the video feed and the water flow rate associated with audio feed along with a camera feed metric and an audio feed metric, to generate a final water flow rate **308**

displaying (310), via the one or more hardware processors, the final water flow rate along with an associated contextual display on a two-way mirror, using an Organic Light Emitting Diode (OLED) display, to a user **310**

**FIG. 3B**

**FIG. 4A**

FIG. 5

**FIG. 6**

**FIG. 7**

**FIG. 8A**

**FIG. 8B**

**FIG. 9A**

**FIG. 9B**

**FIG. 10A**

**FIG. 10B**

**FIG. 11**

**FIG. 12A**

FIG. 12B

Europäisches
Patentamt

European
Patent Office

Office européen
des brevets

# EUROPEAN SEARCH REPORT

**Application Number**

EP 25 20 3520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/155227 A1 (FERIK SAMI EL [SA] ET AL) 20 June 2013 (2013-06-20) * paragraphs [0002], [0006], [0020] - [0031]; figures 4-6 * | 1-15 | INV. G01F1/66 G01F1/00 G01F15/00 G01F15/06 |
| A | US 11 821 770 B2 (VAUGHN REALTY VENTURES LLC [US]) 21 November 2023 (2023-11-21) * column 6, line 53 - column 16, line 33; figures 1-3 * * column 18, line 42 - column 22, line 20; figure 5 * | 1-15 | ADD. G01F25/10 |
| A | ZHANG ZIHUI ET AL: "A Real-Time Intelligent Valve Monitoring Approach through Cameras Based on Computer Vision Methods", SENSORS, vol. 24, no. 16, 18 August 2024 (2024-08-18), page 5337, XP093386215, CH ISSN: 1424-8220, DOI: 10.3390/s24165337 * the whole document * | 1-15 | |
| A | DE SOUZA NILMAR ET AL: "Development of an acoustic flowmeter for low flow rates", FLOW MEASUREMENT AND INSTRUMENTATION. BUTTERWORTH-HEINEMANN, OXFORD., GB, vol. 91, 7 April 2023 (2023-04-07), XP087309481, ISSN: 0955-5986, DOI: 10.1016/J.FLOWMEASINST.2023.102368 [retrieved on 2023-04-07] * the whole document * | 1-15 | TECHNICAL FIELDS SEARCHED (IPC) G01F |

The present search report has been drawn up for all claims

| Place of search | Date of completion of the search | Examiner |
|---|---|---|
| The Hague | 10 April 2026 | Feldhoff, Roger |

## ANNEX TO THE EUROPEAN SEARCH REPORT
## ON EUROPEAN PATENT APPLICATION NO.

EP 25 20 3520

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2026

| Patent document cited in search report | Publication date | Patent family member(s) | Publication date |
|---|---|---|---|
| US 2013155227 A1 | 20-06-2013 | NONE | |
| US 11821770 B2 | 21-11-2023 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421083611